# EUROPEAN PATENT SPECIFICATION

(11) **EP 3 180 271 B1**
(45) Date of publication and mention of the grant of the patent: **11.04.2018**
(21) Application number: 15741192.7
(22) Date of filing: 23.07.2015
(51) Int. Cl.: B65D 85/804, B65D 75/58, A47J 31/40, A47J 31/14, A47J 31/36

(54) **PACKS FOR PREPARING BEVERAGES**
PACKUNGEN ZUR HERSTELLUNG VON GETRÄNKEN
EMBALLAGES POUR PRÉPARER DES BOISSONS

(30) Priority: 14.08.2014 EP 14181043
(43) Date of publication of application: 21.06.2017
(73) Proprietor: Nestec S.A., 1800 Vevey (CH)
(72) Inventor: DUBESSET, Claire, 1135 Denens (CH); VIVIER, Valérie, 01220 Divonne-les-Bains (FR); BUTSCHER, Silvio, 2054 Chezard-St-Martin (CH); BEZET, Nicolas Jean-Guy, 71000 Mâcon (FR)
(74) Representative: Navarro Fernández, Maria Isabel
(86) International application number: PCT/EP2015/066836
(87) International publication number: WO 2016/023726

(56) References cited:
- WO-A1-99/05044
- WO-A1-2011/054402
- WO-A1-2012/175985
- WO-A1-2014/125123
- US-A1- 2012 210 879

## Description

### Field of the invention

The present invention relates to packs and machines for the preparation of foods or beverages from packs comprising a food or beverage ingredient.

### Background of the invention

It is known to prepare beverages by introducing a capsule containing a beverage making ingredient, such as ground coffee or instant coffee, in a beverage dispensing machine and injecting water into the capsule. The beverage making ingredient is extracted or dissolved into water to form the beverage. The beverage flows out of the capsule through a suitable outlet.

Different capsules have been developed in the past that can differentiate at least by the nature of the capsule body used for storing the food or beverage ingredient. Whereas most of the capsules are made of a rigid body or semi-rigid body (e.g. made though injection moulding, thermoforming, deep drawing, ...) flexible types of packs or sachets can be made out of foil materials. Flexible packs have generally the advantage to semi-rigid and rigid capsules that less amount of material is used to pack the product which leads to overall less production cost and lower life cycle impact shown in several life-cycle assessments.

WO 99/05044, GB 2 374 856 and WO 2012/175985 describe such a flexible pack made of two sheets of flexible air-and liquid-impermeable material bonded on theirs edges to define an inner volume for storing the beverage ingredient. The pack comprises an inlet nozzle at its top for introducing water that is mixed with the beverage ingredient inside the inner volume. The beverage is evacuated through a beverage outlet at the bottom of the sachet. The outlet is created further to bursting of the pack under the pressure of water introduced in the sachet. Generally the outlet is created due to the separation of the bottom edges of the flexible sheets further to the effect of heat or pressure in the sachet. According to a particular embodiment a spout can be introduced at the bottom of the pack : in that embodiment, the bottom edges of the flexible sheets do not separate and the beverage is evacuated by the spout.

These flexible sachets present drawbacks. Generally the opening of the beverage outlet is obtained by increase of pressure inside the sachet. Yet this pressure increase is not recommended for the preparation of some beverages because it creates bubbles at the surface of the beverage ; for example it is not desired for the preparation of tea. Besides there can be a risk that the packages may not rupture at the desired pressure and that it can finally opens up in an uncontrollable explosion. For this reason the apparatus comprises means for totally enclosing the pack in the machine during beverage preparation and avoid damages or injuries for the operator.

In order to be able to produce different beverages with different textures from these packs, it has been proposed in WO 2012/175985 to fill the outlet channel by a filtration material for filtering said beverage escaping from said chamber. The beverage preparation machine is able to pinch said outlet channel in order to create a construction and to optimize beverage quality and brewing speed. Accordingly espresso or filter coffee or tea can be produced.

WO 2011/024103 describes a pack for preparing a beverage defining an inner volume for storing the beverage ingredient. The inner volume is closed at its top by a rigid piece that integrates the water inlet and the beverage outlet. Such a pack only enables the preparation of flat beverages obtained by the circulation of water through a food ingredient like roast and ground coffee without pressure.

WO 2013/019963 describes a pack for preparing a beverage defining at least one inner volume for storing the beverage ingredient. The inner volume is closed at its bottom by a rigid piece that integrates a fluid inlet and a beverage outlet. The outlet of the cartridge can comprise a trouser valve, a retractable tube or obstacles to improve mixing.

It is now proposed a new pack for the preparation of a food or beverage that improves the above problems in terms of manufacturing, beverage preparation simplicity and cleanliness leading to an optimal overall beverage quality.

Moreover the present invention aims to propose a range of flexible packs that can be used for preparing different types of beverages presenting different textures, for example either flat or foamed beverages.

Moreover the present invention aims to propose a range of flexible packs that can be used for preparing beverages with different textures, for example either flat or foamed beverages, starting from the same beverage ingredient.

### Summary of the invention

According to a first aspect, the invention concerns a pack with an inner volume in which a food or beverage ingredient is stored and in which a beverage is produced when water is introduced inside, said inner volume being defined by sheets of material joined to one another at their edges and said inner volume presenting a generally plane shape defining a plane (P) vertically oriented during beverage production, said pack comprising at least one inlet for introducing water in the inner volume and at least one outlet for delivering the beverage from said inner volume, said water inlet and said beverage outlet being positioned at the bottom of the pack and being at least partially positioned between two joined edges of the sheets of material, the external end of the water inlet being oriented essentially perpendicularly to the plane (P) defined by the inner volume, and the beverage outlet being a tube extending essentially vertically from the inner volume, and wherein the beverage outlet comprises a hollowed out part where a design adaptor fits to become the internal conduit of the beverage outlet, configuring the internal design of the beverage outlet to enable the preparation of different beverages, differing by their textures. The pack comprises two sheets joined to one another to define the inner volume. As a consequence the pack looks like a pouch or sachet. The sheets are preferably flexible water impermeable sheets. Consequently the pack itself is substantially flexible. By flexible, it is meant that the sheets can be bent easily. The resulting pack can be bent also ; it is soft and can be deformed contrary to rigid containers. The flexible sheet material can be plastic laminates, metallised foil or alufoil or fibre base material. According to the invention the two sheets can be formed of one single sheet folded in half and joined at its free edges.

The pack presents a generally plane shape that is essentially vertically oriented during beverage production.

According to a specific embodiment the pack can comprise more than two sheets, in particular to increase the size of the inner volume. Other sheets can be joined to the two first sheets that defining the inner volume and the generally plane shape according to plane (P) ; said other sheets creates a doypack shape for the inner volume. In such a specific embodiment the water inlet and the beverage outlet are at least partially positioned between two joined edges of the two first sheets of material that define the generally plane shape (P) of the pack.

Internally the beverage outlet is preferably configured so that it delivers the beverage as a free flow once it is opened. The beverage can flow from the outlet by simple gravity fall. The tube creates a communication between the inner volume and outside. An advantage of the outlet of the pack of the present invention is that there is no need to implement a particular connection between the beverage outlet and the beverage machine when a beverage is produced e.g. for directing the flow of beverage delivered at the outlet. The beverage can flow from the pack beverage outlet directly in a drinking cup.

The pack comprises at least one inlet for introducing water in the inner volume and at least one outlet for delivering the beverage from said inner volume, said water inlet and said beverage outlet being positioned at the bottom of the pack and being at least partially positioned between two joined edges of the sheets of material, the external end of the water inlet being oriented essentially perpendicularly to the plane (P) defined by the inner volume, whereas the beverage outlet is a tube extending essentially vertically from the inner volume.

According to this configuration the water inlet and the beverage outlet are essentially perpendicularly oriented one to the other. Consequently the inlet and the outlet emerge on different sides of the pack. This configuration limits the contamination risk of the means for introducing water in the water inlet by the beverage dispensed by the beverage outlet.

In the present invention the inlet and the outlet can be made in one single insert or can be two separate inserts separately positioned in the pack.

In the present invention the insert(s) is(are) preferably rigid. Preferably the inserts are made of a rigid plastic material. This plastic material can be selected in the list of : polypropylene, polyethylene, polyethylene terephthalate and polylactic acid. According to a less preferred embodiment the insert can be made out of a metal like aluminium or tin-plate. The insert(s) can be injection molded.

According to the preferred embodiment the insert comprising the water inlet is positioned in joined bottom edges of the sheets of material so that the water inlet is closed by one sheet of material defining the inner volume.

According to another less preferred embodiment the water inlet insert can be positioned in joined bottom edges so that the water inlet is not closed by one sheet of material defining the inner volume. In that case the water inlet insert is only partially positioned between two joined edges of the sheets of material.

Generally, the insert comprising the beverage outlet is positioned in joined bottom edges of the sheets of material so that the external end of the beverage outlet is positioned under the joined bottom edges of the sheets of material. Preferably the beverage outlet is not covered by the sheet. Yet it can be visually hidden by a part of the sheet e.g. by a skirt of the sheet.

According to the preferred embodiment, the pack comprises one single insert including the water inlet and the beverage outlet, said single insert being positioned at the bottom of the pack and being partially positioned between two joined edges of the sheets of material.

Preferably, the single insert is positioned in joined bottom edges so that the water inlet is closed by one sheet of material defining the inner volume. The external end of the beverage outlet is positioned under the joined bottom edges of the sheets of material.

Less preferably the single insert can be positioned in joined bottom edges so that the water inlet is not closed by one sheet of material defining the inner volume. In that case the insert is only partially positioned between two joined edges of the sheets of material.

In general the single insert is positioned at or next to the middle of the bottom of the pack. It can also be positioned in the corner of the pack when the latter presents a corner.

In the pack the water inlet and the beverage outlet of the pack are both simultaneously included in said same single insert. This feature covers the fact that the water inlet and the beverage outlet are part of the same insert piece in the pack. Yet this insert can be produced by the association of several parts before the complete piece is used for manufacturing the pack. In particular different parts can be attached, e.g. clipped, together to form the final single insert before said single insert is used for manufacturing the pack.

Preferably the single insert of the pack presents a shape for cooperating with the pack receiving area of a beverage production machine. In particular it can present a shape configured for sliding in the slot of the receiving area of a beverage production machine like an iron shape.

According to one preferred mode the pack can be made of only one flexible material sheet, said sheet being folded at the top of the pack and bonded on its edges to define the inner volume, the bottom joined edge including the insert. This embodiment constitutes a particularly easy way to manufacture the pack since it requires the cutting of only one piece of sheet - most preferably according to a rectangular shape - and its folding to create the inner volume for the food or beverage ingredient. The insert(s) can be introduced in the bottom edge during the sealing of the edges.

According to a less preferred mode the pack can be made of two flexible material sheets, said sheets being bonded on their edges to define the inner volume, the bottom joined edges including the insert. The insert(s) can be introduced in the bottom edges during the sealing of these edges, two other side edges of the pack can be bonded so that the inner volume is defined and beverage ingredient can be introduced in said inner volume. Finally the last edges can be bonded to close the inner volume.

The insert(s) can be positioned at any place at the bottom of the pack between the both lateral sides of the bottom ; it(they) can be positioned at a bottom lateral side in particular a corner if the pack is globally rectangular or at any place between the corners.

According to the present invention the food or beverage ingredient of the pack can be comprised within the list of : soups, fruit juices, vegetable juices, bouillons, coffee, chocolate, tea, milk or creamer, smoothies, purees, coulis, creams or a combination thereof.

The food or beverage ingredient can be a soluble food or beverage ingredient. Preferably the food or beverage ingredient is a soluble food or beverage ingredient selected in the list of :
- instant coffee powder, milk powder, cream powder, instant tea powder, cocoa powder, soup powder, fruit powder or mixture of said powders,
- a coffee concentrate, a milk concentrate, a syrup, a fruit or vegetable concentrate, a tea concentrate, a fruit or vegetable puree.

The powders can be agglomerated or sintered. The powders or liquid concentrates can be mixed with solid pieces for example for preparing soups with solid pieces.

The food or beverage ingredient can also be an infusable food or beverage ingredient like a roast and ground coffee or tea leaves. In that embodiment water extracts the infusable ingredient.

In the preferred embodiment the external end of the water inlet can comprise an inlet chamber, said chamber comprising an evacuation end and said evacuation end being an injection hole configured for directing water in the inner volume of the pack in a direction almost perpendicular to the inlet chamber longitudinal axis. Preferably the inlet chamber is globally horizontally oriented. This chamber is usually configured for receiving a hollow needle for injecting water. It can present a circular section. This chamber presents the advantage of creating a distance between the end of the hollow needle and the inner volume which stores the beverage ingredient and consequently avoids the contamination of the needle. Most preferably the chamber evacuation end is a hole pierced in the lateral wall of the chamber.

According to one particular embodiment the water inlet is configured for introducing water under the form of a jet in the inner volume of the pack. By jet it is understood a stream of liquid that comes out of the water inlet and in the inner volume of the pack quickly and with force. So the water inlet is configured for introducing water in the inner volume of the pack with a high velocity. Preferably the water inlet is configured for introducing a water jet in the inner volume of the pack, said water jet presenting a velocity of at least about 20 m/s, preferably at least 30 m/s. According to said first embodiment the water inlet is configured for transforming the pressurized water introduced by a beverage machine in the pack in a high velocity water jet in the inner volume of the pack. Such a configuration can be obtained by placing a constriction in the water path in the water inlet to reduce the size of the section of the water inlet. Due to the small surface of the inlet section pressurized creates a jet of water in the inner volume.

In general the water inlet comprises a hole presenting a transverse section with a surface area equivalent to the surface of a circular surface of diameter of at most 1 mm, preferably at least 0,24 mm.

The velocity for water emerging from the injection hole usually depends from the pressure of the water introduce at the water inlet. The invention generally applies for water pressurised between 2 and 10 bar, preferably of about 7 bar. For such values of pressurized water the water inlet generally comprises an injection hole presenting a transverse section with a surface area equivalent to the surface of a circular surface of diameter comprised between 0,2 and 0,8 mm, preferably between 0,3 and 0,5 mm and even more preferably of about 0,4 mm.

But when water is pressurized at more than 11 bar the water inlet preferably comprises an injection hole presenting a transverse section with a surface area equivalent to the surface of a circular surface of diameter comprised between 0,5 and 1,5 mm, preferably of about 1 mm.

The small surface of the injection hole presents the advantage of avoiding any back flow of liquid contained in the inner volume of the pack through the water inlet.

For the same diluent supply pressure the surface of the diluent injection hole can vary according to the nature of the food and beverage ingredient inside the pack. In particular when the ingredient is difficult to dissolve a smaller injection hole creates a jet with a higher velocity which improves agitation and dissolution in the pack.

Preferably the pack presents a plane shape oriented along a plane essentially vertically oriented during beverage production and the water inlet orientates the jet of water in a direction comprised in said plane. The water jet introduced from the bottom into the pack is developing into circular and/or spiral movements creating turbulences, frictions and high contact surfaces between the water molecules and the product particles. In average the water molecules have several turns within the sachet until they leave the sachet with the beverage. Packs with single insert placed in the corner of an essentially rectangular pack also improve reconstitution.

According to the preferred embodiment of the invention, before beverage preparation step, the beverage outlet is closed at its end. Generally the beverage outlet is closed by manufacturing and is configured for being opened at beverage production step. By "closed by manufacturing" it is meant that the pack is manufactured with a closed beverage outlet. This closure guarantees hygienic and shelf life protection.

According to said embodiment the beverage outlet can be closed by a plug configured for being removed from the beverage outlet to open it at beverage production and said plug comprising a bond attached to the pack, preferably to the single insert, for maintaining the plug attached to the pack after the opening of the beverage outlet, said plug being positioned under the joined bottom edges of the sheets of material.

Since the beverage outlet is closed by a plug, said plug comprising means for maintaining it attached to the pack after the opening of the beverage outlet, the plug does not fall in the beverage during its production. The means for maintaining the plug attached to the pack is usually a bond, said bond is preferably attached to the single insert.

Preferably the plug is part the single insert comprising the beverage outlet and the water inlet. Preferably the beverage outlet is a pipe and the connection between said pipe and the plug presents a mechanical weakness. This mechanical weakness can be a narrowing so that it can be made easy to cut or tear off the plug with a beverage outlet opening device of a beverage preparation machine. This reduced transversal section of the connection between the plug and the beverage outlet pipe creates a weakness. As a consequence the fact of pulling on the plug, facilitates the tearing of the material, of which the single insert is made of, at the level of this connection. The plug can be pulled according to a downwardly oriented direction or a laterally oriented direction or a combination of these both directions.

Preferably the connection between the pipe and the plug presents a smaller section than the plug upper surface and preferably smaller than the pipe section. Since the plug upper surface is larger than the connection section, it provides a surface to have a hold to tear the plug or to anchor a pulling device, for example to anchor a tearing device like the teeth of a fork.

Preferably the bond is attached to the single insert for maintaining the plug attached to the pack after the opening of the beverage outlet is configured for being bent. Consequently after being bent the plug remains away from the beverage outlet. According to that preference the bond is usually made of plastic. The bond can be made so thin that it is flexible. Once detached from the plug it can be moved away from the beverage outlet easily by a bond retaining device of a beverage preparation machine. According to a particular embodiment the plastic bond can present a notch in order to facilitate bending. So the bending of the bond by the retaining device of the machine is facilitated and the bond remains bent even if it is not retained by the bond retaining device of the machine. Preferably the notch is positioned close to the point of attachment of the bond to the single insert.

Preferably the bond is part of the single insert. According to the preferred embodiment the single insert comprises the water inlet, the beverage outlet, the plug and the bond of the plug. The single insert is preferably injection molded. In particular when the insert is injection molded, the design of the injection molded insert comprises the plug and the bond. This injection moulding of the insert including the water inlet, the beverage outlet, the plug and the bond in one single piece enables again to reach several aims with the use of only one material : the plastic for producing the insert comprising the water inlet and the beverage outlet is used to close the external end of the beverage outlet.

According to the present invention, the internal design of the beverage outlet is configured for controlling the properties of the beverage. The internal design of the beverage outlet corresponds to the design of the conduit of the beverage outlet. The internal design acts on the beverage properties while the beverage flows through the outlet. Although the preparation of the beverage is essentially made inside the inner volume of the pack, the beverage outlet enables the improvement of the final qualities of the beverage while the beverage flows through the outlet.

Consequently if the beverage is not well dissolved or brewed inside the inner volume (due to lack of time, due to the viscosity of the product, the volume of ingredient to dissolve or brew) or if the beverage presents a texture (for example bubble) that is not desired, the beverage properties can be improved while the beverage flows through the outlet.

According to a first mode, the internal design of the beverage outlet is configured for limiting the presence of bubbles in the beverage. Such a beverage outlet can be designed to deliver a beverage without bubbles, which is desired for a flat beverage. For example, tea is usually produced with a flat aspect devoid of bubbles.

According to said first mode the internal design of the beverage outlet can be configured for breaking bubbles of the beverage produced in the inner volume while it is dispensed through the beverage outlet.

According to said first mode the internal conduit of the beverage outlet can comprise at least one transverse plate with at least two holes, said hole having a design configured for breaking bubbles while the beverage flows through. By "transverse" it is meant a plane perpendicular to the direction of the flow of the beverage through the beverage outlet, that is usually perpendicular to the axis of the internal conduit of the beverage outlet.

Preferably the whole surface of the at least one transverse plate in the internal conduit of the beverage outlet is pierced by holes.

Preferably the holes in the transverse plate present a design such that at least a part of the outline of each hole is rectilinear. Even more preferably, the holes present a design such that the outline of each hole comprises only rectilinear outline parts. According to one specific embodiment the holes can present the design of a triangle. According to another embodiment the transverse plate can be a grid (a pattern of straight lines that cross each other to form squares).

According to one embodiment the size of the holes in the plate is such that the free flow of beverage through the beverage outlet is almost not restricted compared to the flow of beverage through the same beverage outlet devoid of transverse plate.

Preferably the internal conduit of the beverage outlet comprise one transverse plate such as described above, said plate being positioned at the end of the internal conduit of the beverage outlet (according to the direction of the beverage flow through the outlet).

If the beverage outlet is closed by a plug configured for being removed from the beverage outlet to open it at beverage production, the transverse plate is positioned above the plug in the internal conduit so that it is not removed from the conduit when the plug is removed.

According to a second mode the internal design of the beverage outlet is configured for adjusting the size of bubbles in the beverage. The internal design of the beverage outlet enables the improvement of the quality and the quantity of the bubbles in the beverage. More specifically the internal design of the beverage outlet enables the dispensing of a beverage with bubbles presenting homogenised size. For example this type of beverage outlet enables the preparation of coffee with small size crema bubbles or of milky beverages with milk foam at the top or fruit based beverages with a top layer of foam.

According to said second mode the internal design of the beverage outlet can be configured for dividing the flow of beverage entering in the internal conduit in several separated sub-flows of beverage at the end of the internal conduit of the beverage outlet (according to the direction of the beverage flow through the outlet). Preferably the sub-flows do not merge together and air in between the sub-flows can be mixed with the beverage while it flows in a drinking cup.

According to said second mode the internal conduit of the beverage outlet can comprise at least one transverse plate with at least two holes, said hole having a design configured for dividing the flow of beverage entering in the internal conduit in several separated sub-flows of beverage at the end of the internal conduit of the beverage outlet (according to the direction of the beverage flow through the outlet). By "transverse" it is meant a plane perpendicular to the direction of the flow of the beverage through the beverage outlet, that is usually perpendicular to the axis of the internal conduit of the beverage outlet.

If the beverage outlet is closed by a plug configured for being removed from the beverage outlet to open it at beverage production, the transverse plate is positioned above the plug in the internal conduit so that it is not removed from the conduit when the plug is removed.

The holes in the plate can have any design, they are usually circular.

Preferably the number of holes in the plate and the size of the holes in the plate is such that the created sub-flows do not merge together downstream to the transverse plate and air in between the sub-flows can be mixed with the beverage while it flows in a drinking cup.

According to a third mode the internal design of the beverage outlet is configured for improving mixing of the beverage ingredient and water before dispensing.

The internal design of the beverage outlet can improve the dissolution of the beverage ingredient or the time of contact between the beverage ingredient and water.

The beverage outlet can comprise a static mixer in order to increase flow turbulence inside the internal conduit of the beverage outlet and/or to increase the path of the beverage flow in the internal conduit of the beverage outlet.

According to a specific embodiment the internal conduit of the beverage outlet can comprise several constrictions along the direction of the beverage flow through the conduit.

According to a particular embodiment the pack can comprise at least two outlets, said outlets differing by their internal design.

The different outlets can enable to the preparation of different beverages, said beverage differing by their textures or visual aspects.

Preferably in such a pack, the sheets of material on the opposed sides of the plane (P) present different information relative to the preparation of different beverages either with one outlet or the other outlet.

Such a pack can be filled with soluble coffee and can comprise two different beverage outlets, the first one for dispensing a flat coffee without bubbles and the second one for dispensing coffee with a layer of crema. On one side of the pack corresponding to the opening of the first outlet by the beverage preparation machine when the pack is normally introduced in the machine, there is information related to a flat coffee. Whereas on the other side of the pack corresponding to the opening of the second outlet by the beverage preparation machine when the pack is normally introduced in the machine, there is information related to a coffee with crema.

Whatever the mode of the present invention and the internal design of the beverage outlet in the insert, the insert can be produced by injection moulding with the desired internal design.

According to a variant the internal design of the beverage outlet in the insert can be obtained by introduction of an additional piece inside the beverage outlet of the insert. Different additional pieces can be designed in order to get different final designs of the beverage outlet.

According to a second aspect the invention concerns a system for producing a range of single inserts comprising at least one water inlet and at least one beverage outlet for a pack according to any one of the precedent claims, said system comprising :
- one single insert body comprising the at least one water inlet and at least one hollowed out part for receiving one design adaptor defining the internal design of the beverage outlet,
   and
- at least two different design adaptors defining different internal designs of the beverage outlet and configured to cooperate with the hollowed out part of the single insert body.

This system of one single insert body and several design adaptors enable the manufacturing of different single inserts for the production of packs such as described above. Manufacturing is optimised since only one mould is needed for the production of the single insert body and then the internal design of the beverage outlet can be finalised by the choice of the different design adaptors to be introduced in the hollowed out part of the single insert body and depending on the beverage to be produced from the pack.

Generally the hollowed out part presents the shape of a tube hollowed out from the top surface of the single insert body and extending to the bottom of the insert.

Preferably, in the single insert body, the end of hollowed out part is closed by a plug, said plug comprising a bond attached to the single insert body.

The design adaptors can be tubes presenting different internal designs or blades.

According to a particular embodiment the single insert body can comprise two hollowed out parts, each of them being configured for receiving one design adaptor defining the internal design of the beverage outlet.

According to a third aspect the invention concerns a range of packs such as described above wherein the packs differ by the internal design of the beverage outlet.

In particular the range of packs can comprise different outlets designed according to the type of beverage to be produced and/or the beverage ingredient inside the inner volume.

According to a fourth aspect the invention concerns a method for the preparation of a food or beverage comprising the steps of:
- providing a pack such as described above and positioning said pack with the inlet and the outlet positioned downwardly,
- injecting water into the pack to mix with the food or beverage ingredient,
- allowing the prepared beverage to escape through the outlet into a receptacle.

Preferably the pack is not pressurized during the beverage preparation. This effect can be obtained by opening the beverage outlet before water is introduced in the pack or simultaneously to the introduction of the water in the pack or a little bit after the introduction of the water in the pack. Globally the beverage is prepared with the both water inlet and beverage outlet being opened.

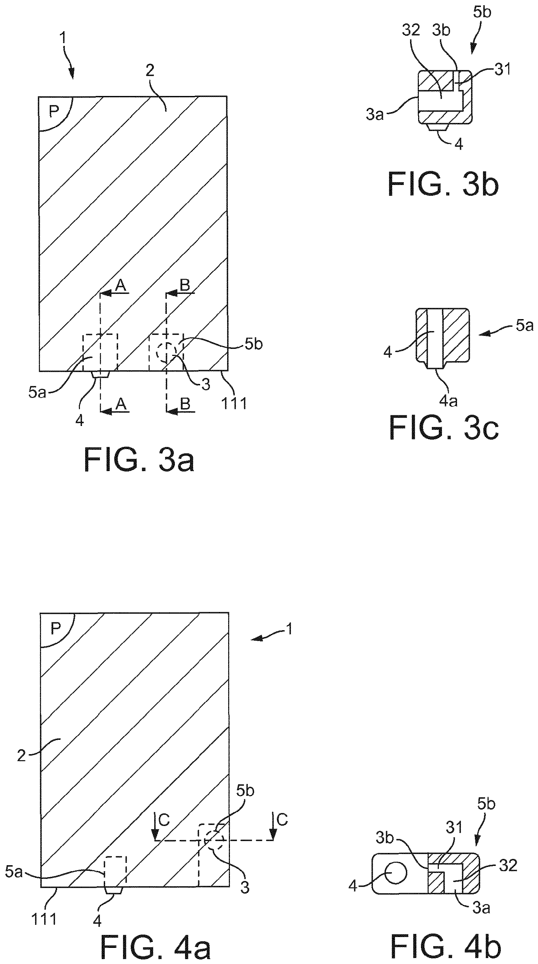

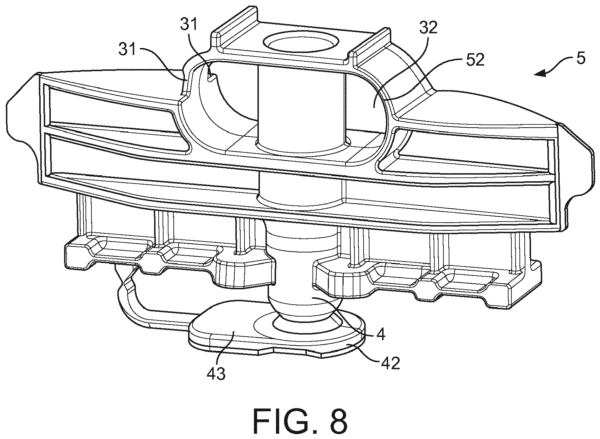

In the present application the terms "bottom", "top", "lateral", "horizontal" and "vertical" are used to describe the relational positioning of features of the invention. These terms should be understood to refer to the pack in its normal orientation when introduced in a beverage preparation machine for the production of a beverage as shown for example in Figures 4 and 8.

According to the invention "next to the bottom" means that both the inlet and the outlet are positioned on the bottom edge of the pack and/or on the bottom part of one of the lateral sides of the package. The invention covers the different variants where both the inlet and the outlet are on the same edge of the pack that is both on the bottom edge or both at the bottom part of a lateral side and where either the outlet or the inlet is on the bottom edge and respectively the inlet or the outlet is at the bottom part of a lateral side of the pack. According to the invention the bottom part of a lateral side of the pack generally corresponds to the part of said lateral side positioned below the middle part of the pack and preferably closer to the bottom part of the pack rather than the middle part of the pack.

In the present invention the term "water" covers any aqueous diluent that can be mixed with a soluble beverage ingredient to prepare a beverage, like water, carbonated water, milk. It is preferably still water.

### Brief description of the drawings

The characteristics and advantages of the invention will be better understood in relation to the following figures, in which :
- Figures 1a, 1b, 1c and Figures 2a, 2b illustrate packs according to the present invention, each pack comprising one single insert,
- Figures 3a, 3b, 3c and Figures 4a, 4b illustrate packs according to the present invention, each pack comprising two inserts,
- Figure 5 illustrates a variant of the pack of Figure 1 a,
- Figure 6 illustrates a method for manufacturing a pack according to the present invention,
- Figure 7 illustrate a pack and its insert according to one preferred embodiment of the present invention,
- Figure 8 is a variant of the single insert of Figure 7,
- Figure 9 is a variant of the single insert of Figure 7,
- Figures 10a and 10b illustrates an insert according to the first mode of the present invention,
- Figures 11 a and 11b illustrates an insert according to the second mode of the present invention,
- Figures 12a and 12b illustrates an insert according to the third mode of the present invention,
- Figure 13 illustrates the preparation of a beverage with a pack according to the invention.

### Detailed description of the drawings

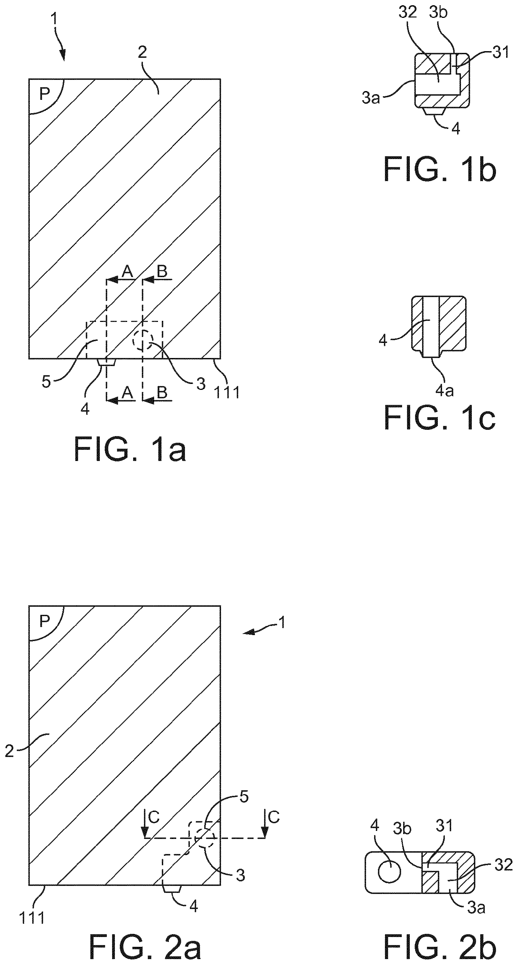

**Figure 1a** is a simplified illustration of pack according to the present invention comprising an inner volume 2 in which a food or beverage ingredient is stored. The pack comprises at its bottom a single insert 5. The dotted lines correspond to the parts of the insert enclosed inside the pack. The insert 5 includes simultaneously a water inlet 3 for introducing water in the inner volume and a beverage outlet 4 for dispensing the beverage or food issued from the mixing of the food or beverage ingredient with water. The pack presents a generally plane shape. It is oriented along a plane P essentially vertically oriented during beverage production as illustrated in the Figure 1 a. This plane shape is essentially provided by the material that creates and designs the inner volume 2 of the pack ; this material presents the shape of a sheet. Said sheet provides the plane shape to the pack. In Figure 1a the insert 5 is positioned at the centre of the bottom of the pack, yet it could be positioned at any other position between the two lateral ends of the bottom.

The internal designs of the water inlet and the beverage outlet are respectively illustrated in **Figure 1b**, which is a view according to section B-B, and **Figure 1c**, which is a view according to section A-A. Figure 1c shows that the beverage outlet 4 is a straight vertical hole pierced in the insert 5. Preferably the beverage outlet 4 presents a sufficient section so as to enable a free flow of the beverage from the pack. The beverage can then freely flow in a drinking cup placed under the beverage outlet 4. Figure 1b shows that the external end 3a of the water inlet is oriented so as to be closed by the sheet of material that creates and designs the inner volume 2 of the pack. Said external end 3a comprises and inlet chamber 32. Said chamber present an evacuation hole 31 in its lateral upward wall so as to orient the water flow, preferably in the form of a jet, in the inner volume 2 inside the plane P.

The sheet of material that defined the inner volume 2 covers at least the part of the insert 5 so that the water inlet 3 is enclosed in the pack. Consequently the external end 3a of the water inlet is closed by the material that defines the inner volume of the pack. In the embodiment illustrated in Figure 1 a a part of the beverage outlet - that is its external end 4a - is not enclosed in the pack.

This embodiment of the invention presents the advantage of providing packs with inlet and outlet that are not in the vicinity of each other. Actually according to this embodiment the inlet and the outlet are on different sides of the pack : the beverage outlet external end is below the bottom of the pack whereas the water inlet external end is at the lateral side of the pack. Such a configuration particularly avoids contamination of the means for injecting water by the beverage flowing out of the beverage outlet. Besides a beverage preparation machine providing simultaneously a water injector and a dispensing area at the bottom of the pack receiving area is more difficult to conceive and does not enable an optimisation of the different elements of the machine.

**Figure 2a** is a variant of the pack of Figure 1 a wherein the insert 5 presents an L-shape and is placed in the corner of the inner volume of the pack. The beverage outlet 4 presents the same feature as in the pack of Figure 1 a. The water inlet is positioned in the upper part of the L-shape insert. The internal shape of the water inlet is illustrated in **Figure 2b** that is view of the insert 5 according to section C-C. The external end 3a of the water inlet comprises an inlet chamber 32 that is closed by the material that defines the inner volume of the pack. The chamber presents a essentially horizontal evacuation hole 31 in its lateral wall so as to orient the water flow, preferably in the form of a jet, in the inner volume 2 inside the plane P.

Although Figures 1a, b, c and 2a, b illustrates packs with single insert 5, packs can be made with different inserts for the water inlet 3 and for the beverage outlet 4 as illustrated in Figures 3a, 3b, 3c and Figures 4a, 4b.

**Figure 3a** presents the same features as the pack of Figure 1 a except that the single insert 5 is replaced by two inserts 5a, 5b, one comprising the beverage outlet 4 and one comprising the water inlet 3. The internal designs of the beverage outlet 4 and the water inlet 3 are identical to those of the beverage outlet 4 and the water inlet 3 of Figure 1a, as illustrated in cross sections of the inserts 5b and 5a according to BB and AA respectively in **Figures 3b and 3c** respectively.

Similarly **Figure 4a** presents the same features as the pack of Figure 2a except that the single insert 5 is replaced by two inserts 5a, 5b, one comprising the beverage outlet 4 and one comprising the water inlet 3. The insert 5a for the beverage outlet is identical to the insert of Figure 3a and presents the same internal design as illustrated in Figure 3c. **Figure 4b** is the cross section of the insert 5b of the water inlet 3 according to CC and illustrates the internal design of the water inlet inside the insert.

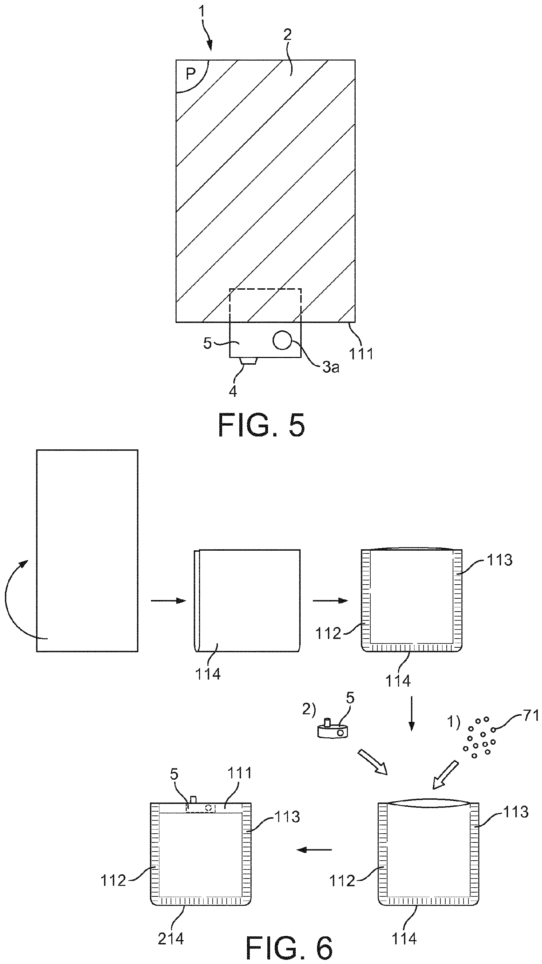

Whatever the type of insert in the packs, the packs can be configured so that the external end 3a of the water inlet is not closed by the sheet of material that creates and designs the inner volume 2 of the pack. This embodiment can be due to the fact that the external end 3a of the water inlet is closer to the bottom of the insert and/or because the sheet of material does not cover the full surface of the insert 5, for example the bottom edge 111 of the sheet does not cover the lower part of the insert or presents a notch that does not cover the water inlet external end. **Figure 5** schematically illustrates such an embodiment wherein only the top part of the single insert 5 is positioned between and covered by two joined bottom edges 111 of the sheets of material. The external end 3a of the water inlet is not covered.

**Figure 6** illustrates a method for manufacturing a pack according to the invention from a flexible sheet of material. First the sheet of material 10 that preferably presents a rectangular shape is folded in its middle and the superposed lateral edges are bonded together which creates pouch with bonded lateral edges 112, 113 and a folded edge 114. The folded edge 114 can also eventually be sealed to give a comparable aspect as the lateral edges for aesthetic aspect. Then food or beverage ingredient 7 is introduced in the pouch. Then the single insert 5 is placed between the two last opened edges and these edges are bonded together and around the insert to simultaneously close the pack, position the insert and close the water inlet. According to a less preferred embodiment the inserts of the beverage outlet and the water inlet can be separated.

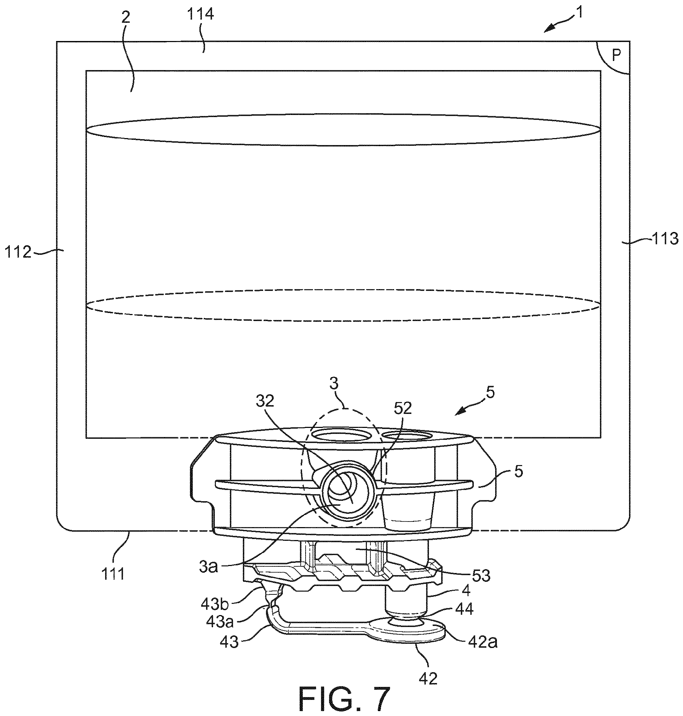

**Figure 7** illustrates a pack according one preferred embodiment of the invention. In this illustration the bottom middle part of the inner volume 2 has been made transparent to make the insert 5 apparent. The pack is preferably a planar sachet : it is oriented along a plane P essentially vertically oriented during beverage production. inner volume 2 is made of flexible material sheet material. The sheet material is bonded on its edges 112, 113, 111 to define the inner volume 2. The bottom bonded edge 13 includes the single insert 5 : the fins 51 and the raising edge 52 around the water inlet 3 on the lateral sides of the insert improves the adhesion with the flexible material sheet during sealing.

The insert 5 is a single piece of material preferably of plastic. It includes simultaneously a water inlet 3 for introducing water in the inner volume and a beverage outlet 4 for dispensing the beverage or food issued from the mixing of the food or beverage ingredient with water.

The water inlet 3 presents at its external end 3a an inlet chamber 32. This chamber is a hollow cavity ; it is globally horizontally oriented, that is perpendicularly to the plane P. Its dimensions are configured for receiving the hollow needle of a beverage preparation machine in order to inject water. The inlet chamber presents an evacuation end in its upper lateral wall : this evacuation end corresponds to an injection hole 31 (illustrated in Figures 5 and 6) from which water can be injected in the inner volume 2. Due to the configuration of the water inlet the water can be injected essentially horizontally at its external end 3a and, for example, essentially vertically in the inner volume 2 of the pack.

The invention is not limited to this particular design of the water inlet. For example **Figure 8** illustrates a single insert 5 wherein the inlet chamber 32 comprises two evacuation ends 31 in its side wall. As a consequence with such an insert water can be introduced in the inner volume of the pack essentially horizontally. In such an insert a part of the walls of the inlet chamber is defined by the sheet material covering the insert.

Whatever the type of embodiment for the insert, the beverage outlet is an essentially vertical pipe in the insert. It preferably presents a diameter for dispensing the beverage under free flow. The beverage outlet is preferably closed at its external end by a plug 42. This plug is preferably made of one piece with the rest of the insert.

In the preferred illustrated embodiment the beverage outlet 4 is a pipe and the plug 42 is attached to the end of the pipe. The connection 44 between the pipe and the plug 42 presents a smaller section than the plug upper surface 42a and smaller than the pipe section. This connection creates a weakening narrow zone near the plug 42 so that said plug can be made easy to cut or to tear.

The pack comprises a plastic bond 43 for maintaining the plug 42 attached to the pack after removing of the plug from the beverage outlet. Consequently it avoids that the plug falls in the beverage during its production. This bond is made of one piece with the rest of the insert. The plastic bond 43 presents a notch 43a positioned close to the point 43b of attachment of the bond to the single insert. This notch enables an easy bending of the bond it guarantees that the plug 42 detached from the beverage outlet remains away from the beverage outlet and not under the beverage outlet.

The inserts 5 of Figures 7 and 8 comprise a centring hole 53 extending essentially perpendicularly to the generally plane (P) shape of the inner volume and through the insert. It is configured for cooperating with the centring and immobilization device of the beverage preparation machine.

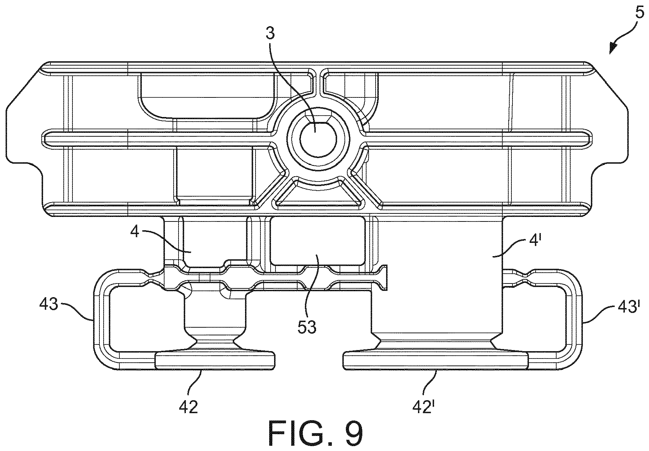

**Figure 9** illustrates the specific embodiment of an insert of a pack according to the invention, the insert comprising two outlets 4, 4'. Each outlet 4, 4' is closed by a dedicated plug 42, 42' attached by a dedicated bond 43, 43'. The outlets 4, 4' differ by their internal designs (not illustrated). For example the first outlet 4 can be internally designed for dispensing a flat beverage and the second outlet 4' can be internally designed for dispensing a foamed beverage.

Depending on the orientation of the pack in the beverage preparation machine when it is introduced inside, either a foamed or flat beverage can be prepared from the same pack. Information can be provided on the sheets of the pack in order to help the consumer to correctly orientate the pack in the machine and to get the type of beverage he/she desires.

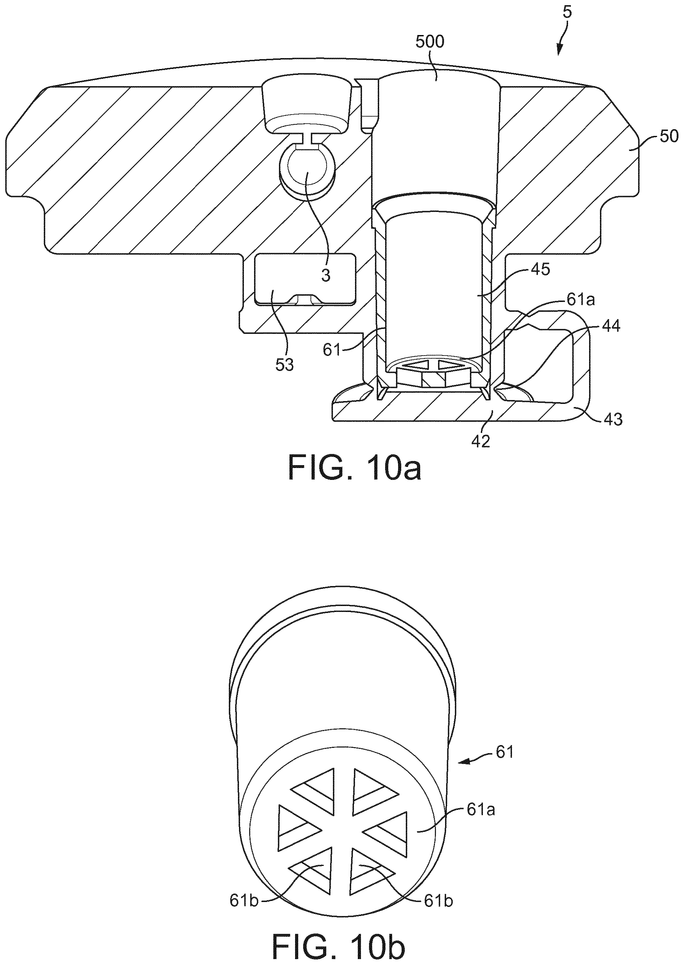

**Figure 10a** illustrates an insert according to the first mode of the present invention. Externally the insert presents the same features as the single insert 5 of the pack of Figure 7. Figure 10a is a longitudinal cross section view of the insert making apparent the internal design of the beverage outlet. Internally the beverage outlet 4 comprises an internal conduit 45. This internal conduit is an essentially straight conduit. At the bottom end 45a of the conduit the outlet comprises one transverse plate 61a with six holes 61b presenting the shape of triangles. The triangles are positioned one to the other so as to form a grid of straight lines.

In the embodiment of Figure 10a the surfaces of all the triangles in the transverse plate is of about 6 mm².

When a beverage flows through the pierced plate 61a the free flow of beverage is almost not restricted compared to the flow of beverage through the same beverage outlet devoid of pierced plate. Yet the grid formed by the triangles breaks the bubbles of the beverage when entering in contact with the plate.

The plate 61a is positioned in the internal conduit above the connection 44 between the beverage pipe and the plug 42 so that when the plug is cut or torn the plate 61a is positioned at the bottom end of the beverage outlet.

Figure 10a also illustrates the system according to the second aspect of the invention. Actually the insert 5 is made of two elements :
- firstly a single insert body 50 comprising the water inlet 3 and at least one hollowed out part 500 extending vertically from the top surface of the single insert body, The hollowed out part 500 remains closed at its bottom by the plug 42.
- secondly one design adaptor 61 defining the internal design of the beverage outlet. Figure 10b illustrates said design adaptor 61 alone that has not yet been introduced inside the hollowed out part of the single insert body.

The design adaptor 61 and the hollowed out part 500 present conformal shapes and dimensions so that the design adaptor 61 can slide in the hollowed out part 500 and exactly fit inside to become the internal conduit of the beverage outlet of the single insert. Generally the design adaptor 61 and the hollowed out part 500 presents tubular shapes.

In the illustrated embodiment the design adaptor 61 is a tube presenting a smaller length than the length of the hollowed out tube.

According to another embodiment of the invention, an extra transverse plate, similar to 61b, can be placed in the hollowed out part 500, between the connection of said part 500 with the internal conduit 45, for an extra foaming.

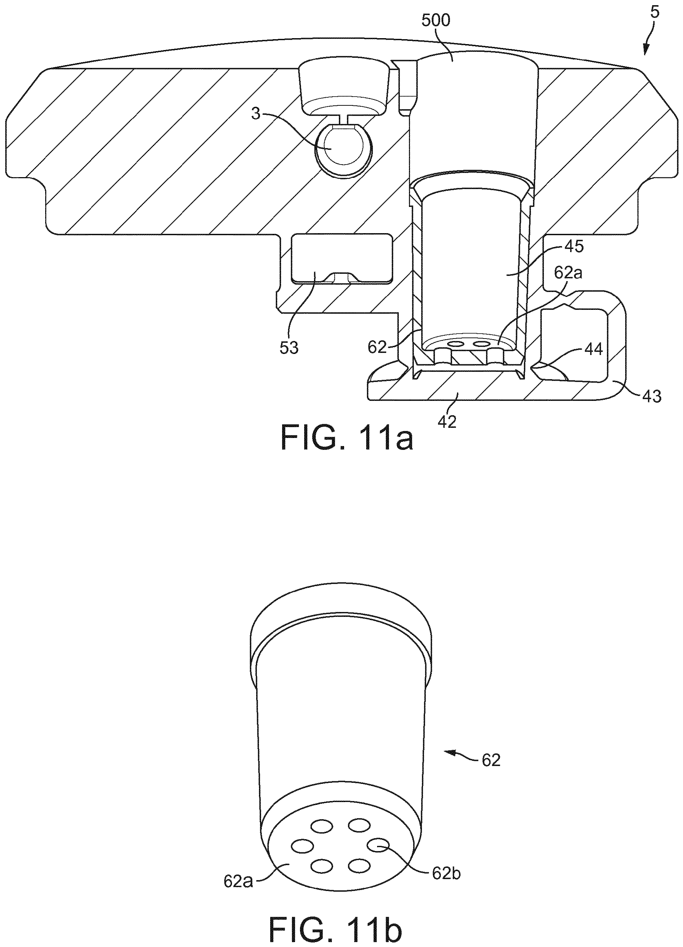

**Figure 11** **a** illustrates an insert according to the second mode of the present invention. It present the same features as the insert of Figure 10a except that at the bottom end 45a of the conduit the outlet comprises one transverse plate 62a with six round holes 62b.

In the embodiment of Figure 11a the sum of the surfaces of all the round holes in the transverse plate is of about 3 mm².

When a beverage flows through the pierced plate 62a the free flow of beverage is divided in six sub-flows. Due to the rather small size of the holes 62b the sub-flows are well separated and air in between the different sub-flows is carried along the beverage sub-flows and mix with the beverage creating foam in the beverage. The holes in the plates are designed to create a shower of beverage.

The plate 62a is positioned in the internal conduit above the connection 44 between the beverage pipe and the plug 42 so that when the plug is cut or torn the plate 62a is positioned at the bottom end of the beverage outlet.

The single insert of Figure 11 a is made by the association of the same single insert body 50 illustrated in Figure 10a and of a design adaptor 62 defining the internal design of the beverage outlet. **Figure 11b** illustrates said design adaptor 62 alone that has not yet been introduced inside the hollowed out part of the single insert body. Said design adaptor 62 presents the same external shape as the design adaptor 61 of Figure 10b in order to cooperate with the single insert body 50 but it presents a different plate 62b in order to define a different internal design of the beverage outlet 4.

According to another embodiment of the invention, an extra transverse plate, similar to 62b, can be placed in the hollowed out part 500, between the connection of said part 500 with the internal conduit 45, for an extra foaming.

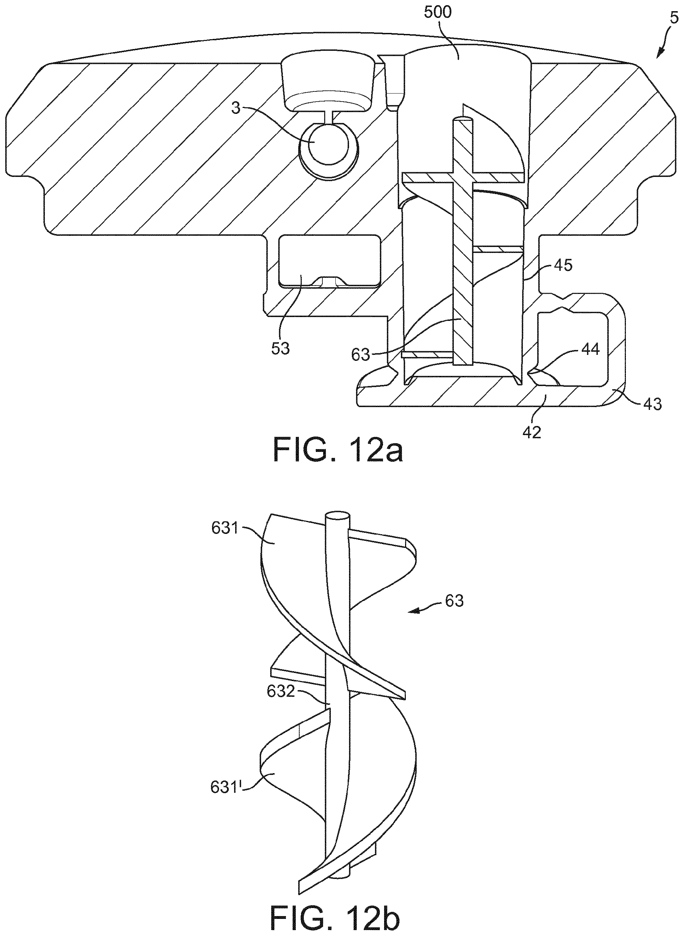

**Figure 12a** illustrates an insert according to the third mode of the present invention. It present the same features as the insert of Figure 10a except that at the internal design of the beverage outlet comprises a mixing device 63 consisting in mixing blades. In the illustrated embodiment the mixing blades are hellicoidal blades 631, 631' positioned around a longitudinal axis 632.

When a beverage flows through the beverage outlet, a turbulent flow is created by the mixing blades 631, 631' which increase mixing and dissolution in the beverage before is dispensed at the bottom of the beverage outlet.

The single insert of Figure 12a is made by the association of the same single insert body 50 illustrated in Figure 10a and of a design adaptor 63 defining the internal design of the beverage outlet. **Figure 12b** illustrates said design adaptor 63 alone that has not been introduced inside the hollowed out part of the single insert body.

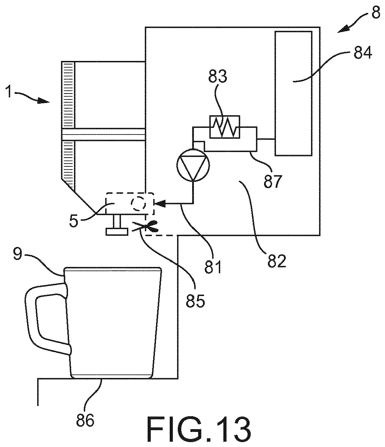

**Figure 13** illustrates the interaction of a pack 1 according to the present invention with a beverage preparation machine 8 according to the present invention. The machine comprises at least:
- a water tank 84,
- a heater 83 for heating water,
- a bypass line 87 for delivering ambient water,
- a valve (not illustrated) for the selection of either hot or ambient water,
- a pump 82 for pumping water. The pump can deliver water at a pressure comprised between 2 and 10 bar.
- a water nozzle or needle 81 for injecting water in the water inlet of the pack 1.

Preferably the machine comprises a drip tray 86 on which a drinking cup 9 can be positioned under the beverage outlet of the pack when a beverage is prepared.

The machine comprises an area (not illustrated) for receiving the pack that is configured so that the pack 1 is positioned with the single insert positioned at the bottom of the pack. The pack can be well centred and immobilised in the receiving area by a rod (not illustrated) configured for sliding in the centring hole 53 of the single insert (illustrated in Figures 4, 5, 6).

Preferably the pack is not pressurized during the beverage preparation. This effect can be obtained by opening the beverage outlet before water is introduced in the pack or simultaneously to the introduction of the water in the pack or a little bit after the introduction of the water in the pack. Consequently globally the beverage is prepared with the both water inlet and beverage outlet being opened. The opening of the water inlet is usually made by a needle 81 for introducing water. As for the beverage outlet it can be opened by the machine when the pack is placed inside or by the user manually. The illustrated machine comprises a beverage outlet opening means 85, for example a cutter for removing the plug 42 of the beverage outlet of the pack 1 when the pack presents a plug at the beverage outlet. The cutter 85 can be positioned so that the plug of the beverage outlet is automatically cut when the pack is introduced in the machine or when the beverage preparation is activated.

The present invention presents the advantage of proposing a range of packs for producing different beverages presenting various textures and aspects.

The present invention presents the advantage of proposing a range of packs for producing the same beverage (for example coffee) with different textures and aspects (for example flat or foamed).

## Claims

1. A pack (1) with an inner volume (2) in which a food or beverage ingredient (7) is stored and in which a beverage is produced when water is introduced inside,
said inner volume (2) being defined by sheets of material (10) joined to one another at their edges and said inner volume (2) presenting a generally plane shape defining a plane (P) vertically oriented during beverage production,
said pack comprising at least one inlet (3) for introducing water in the inner volume and at least one outlet (4) for delivering the beverage from said inner volume, said water inlet and said beverage outlet being positioned at the bottom of the pack and being at least partially positioned between two joined edges of the sheets of material (10), and
the external end (3a) of the water inlet (3) being oriented essentially perpendicularly to the plane (P) defined by the inner volume (2), and
the beverage outlet (4) being a tube extending essentially vertically from the inner volume (2),
and
wherein the beverage outlet comprises a hollowed out part (500) where a design adaptor (61, 62, 63) fits to become the internal conduit of the beverage outlet, configuring the internal design of the beverage outlet to enable the preparation of different beverages, differing by their textures.

2. A pack according to Claim 1 wherein the pack comprises one single insert including the water inlet and the beverage outlet, said single insert being positioned at the bottom of the pack and being partially positioned between two joined edges of the sheets of material.

3. A pack according to any one of the precedent claims wherein the internal design of the beverage outlet is configured for limiting the presence of bubbles in the beverage.

4. A pack according to the precedent claim wherein the internal conduit of the beverage outlet comprises at least one transverse plate with at least two holes, said hole having a design configured for breaking bubbles while the beverage flows through.

5. A pack according to the precedent claim wherein the holes in the transverse plate present a design such that at least a part of the outline of each hole is rectilinear.

6. A pack according to any one of Claims 1 or 2, wherein the internal design of the beverage outlet is configured for adjusting the size of the bubbles in the beverage.

7. A pack according to the precedent claim wherein the internal design of the beverage outlet can be configured for dividing the flow of beverage entering in the internal conduit in several separated sub-flows of beverage at the end of the internal conduit of the beverage outlet.

8. A pack according to any one of the Claims 1 or 2 wherein the internal design of the beverage outlet is configured for improving mixing of the beverage ingredient and water before dispensing.

9. A pack according to the precedent claim wherein the beverage outlet comprises a static mixer in order to increase flow turbulence inside the internal conduit of the beverage outlet and/or to increase the path of the beverage flow in the internal conduit of the beverage outlet.

10. A pack according to any one of the precedent claims wherein said pack comprises at least two beverage outlets (4), said outlets differing by their internal design.

11. System for producing a range of single inserts comprising at least one water inlet (3) and at least one beverage outlet (4) for a pack according to any one of the precedent claims, said system comprising:
- one single insert body (50) comprising the at least one water inlet (3) and at least one hollowed out part (500) for receiving one design adaptor defining the internal design of the beverage outlet,
and
- at least two different design adaptors (61, 62, 63) defining different internal designs of the beverage outlet and fitting_with the hollowed out part (500) of the single insert body.

12. System according to the precedent claim wherein in the single insert body () the end of hollowed out part (500) is closed by a plug, said plug comprising a bond attached to the single insert body.

13. System according to Claim 11 or 12 wherein design adaptors are tubes presenting different internal designs.

14. System according to Claim 11 or 12 wherein design adaptors are mixing blades.

15. System according to any one of Claims 11 to 14 for producing a pack according to Claim 10 wherein the single insert body (50) comprises two hollowed out parts (500) each being configured for receiving and fitting one design adaptor (61, 62, 63) defining the internal design of the beverage outlet.

16. A range of packs (1a, 1b) according to any of Claims 1 to 10 wherein the packs differ by the internal design of at least one beverage outlet (4).

17. A method for the preparation of a food or beverage comprising the steps of:
- providing a pack (1) according to any one of claims 1 to 10 and positioning said pack with the inlet and the outlet positioned downwardly,
- injecting water into the pack to mix with the food or beverage ingredient,
- allowing the prepared beverage to escape through the outlet into a receptacle.

18. A method according to Claim 17, wherein the pack (2) is not pressurized during the beverage preparation

## Patentansprüche

1. Packung (1) mit einem Innenvolumen (2), in dem ein Nahrungsmittel- oder Getränkeinhaltsstoff (7) aufbewahrt wird, und in dem ein Getränk erzeugt wird, wenn Wasser darin eingebracht wird,
wobei das Innenvolumen (2) definiert ist durch Materialbögen (10), die miteinander an ihren Rändern verbunden sind, und das Innenvolumen (2) eine im Allgemeinen ebene Form darstellt, die eine Ebene (P) definiert, die während der Getränkezubereitung vertikal ausgerichtet ist,
wobei die Packung mindestens eine Einlassöffnung (3) zum Einleiten von Wasser in das Innenvolumen und mindestens einen Auslass (4) zur Abgabe des Getränks von dem Innenvolumen umfasst, wobei der Wassereinlass und der Getränkeauslass an der Unterseite der Packung angeordnet sind und mindestens teilweise zwischen zwei verbundenen Rändern der Materialbögen (10) positioniert sind, und
das äußere Ende (3a) des Wassereinlasses (3) im Wesentlichen senkrecht zur Ebene (P) ausgerichtet ist, die durch das Innenvolumen (2) definiert ist, und
der Getränkeauslass (4) ein Rohr ist, das im Wesentlichen vertikal von dem Innenvolumen (2) verläuft, und
wobei der Getränkeauslass einen ausgehöhlten Teil (500) umfasst, wo ein Konstruktionsadapter (61, 62, 63) passt, um der innere Kanal des Getränkeauslasses zu werden, wobei die innere Konstruktion des Getränkeauslasses konfiguriert wird, um die Zubereitung unterschiedlicher Getränke, die sich nach ihren Texturen unterscheiden, zu ermöglichen.

2. Packung nach Anspruch 1, wobei die Packung einen einzelnen Einsatz umfasst, der den Wassereinlass und den Getränkeauslass einschließt, wobei der einzelne Einsatz am Boden der Packung angeordnet ist und sich teilweise zwischen zwei verbundenen Rändern der Materialbögen befindet.

3. Packung nach einem der vorangehenden Ansprüche, wobei die innere Konstruktion des Getränkeauslasses konfiguriert ist, um das Vorhandensein von Luftblasen in dem Getränk einzuschränken.

4. Packung nach dem vorangehenden Anspruch, wobei der innere Kanal des Getränkeauslasses mindestens eine Querplatte mit mindestens zwei Öffnungen umfasst, wobei die Öffnung eine Konstruktion aufweist, die konfiguriert ist, um Luftblasen aufzubrechen, während das Getränk hindurchfließt.

5. Packung nach dem vorangehenden Anspruch, wobei die Öffnungen in der Querplatte eine derartige Konstruktion präsentieren, dass mindestens ein Teil des Umrisses jeder Öffnung geradlinig ist.

6. Packung nach einem der Ansprüche 1 oder 2, wobei die innere Konstruktion des Getränkeauslasses zum Anpassen der Größe der Blasen in dem Getränk konfiguriert ist.

7. Packung nach dem vorangehenden Anspruch, wobei die innere Konstruktion des Getränkeauslasses zum Teilen des Flusses des in den inneren Kanal eintretenden Getränks in mehrere getrennte Unterströme des Getränks am Ende des inneren Kanals des Getränkeauslasses konfiguriert sein kann.

8. Packung nach einem der Ansprüche 1 oder 2, wobei die innere Konstruktion des Getränkeauslasses konfiguriert ist, um die Mischung des Getränkeinhaltsstoffs und Wassers vor der Abgabe zu verbessern.

9. Packung nach dem vorangehenden Anspruch, wobei der Getränkeauslass einen statischen Mischer umfasst, um die Strömungsverwirbelung im inneren Kanal des Getränkeauslasses zu erhöhen und/oder den Pfad des Getränkeflusses im inneren Kanal des Getränkeauslasses zu erhöhen.

10. Packung nach einem der vorangehenden Ansprüche, wobei die Packung mindestens zwei Getränkeauslässe (4) umfasst, wobei die Auslässe sich durch ihre innere Konstruktion unterscheiden.

11. System zum Herstellen einer Reihe von einzelnen Einsätzen, die mindestens einen Wassereinlass (3) und mindestens einen Getränkeauslass (4) für eine Packung nach einem der vorangehenden Ansprüche umfassen, wobei das System Folgendes umfasst:
- ein einzelnes Einsatzgehäuse (50), das den mindestens einen Wassereinlass (3) und mindestens einen ausgehöhlten Teil (500) zum Aufnehmen eines Konstruktionsadapters umfasst, der die innere Konstruktion des Getränkeauslasses definiert,
und
- mindestens zwei unterschiedliche Konstruktionsadapter (61, 62, 63), die unterschiedliche innere Konstruktionen des Getränkeauslasses definieren und in den ausgehöhlten Teil (500) des einzelnen Einsatzgehäuses passen.

12. System nach dem vorangehenden Anspruch, wobei in dem einzelnen Einsatzgehäuse () das Ende des ausgehöhlten Teils (500) mit einem Stopfen verschlossen ist, wobei der Stopfen eine Verbindung mit dem einzelnen Einsatzgehäuse umfasst.

13. System nach Anspruch 11 oder 12, wobei Konstruktionsadapter Rohre sind, die verschiedene innere Konstruktionen präsentieren.

14. System nach Anspruch 11 oder 12, wobei Konstruktionsadapter Mischblätter sind.

15. System nach einem der Ansprüche 11 bis 14 zum Herstellen einer Packung nach Anspruch 10, wobei das einzelne Einsatzgehäuse (50) zwei ausgehöhlte Teile (500) umfasst, die jeweils zum Aufnehmen von und Passen an einen Konstruktionsadapter (61, 62, 63) konfiguriert sind, die die Innenkonstruktion des Getränkeauslasses definieren.

16. Palette von Packungen (1a, 1b) nach einem der Ansprüche 1 bis 10, wobei die Packungen sich durch die Innenkonstruktion von mindestens einem Getränkeauslass (4) voneinander unterscheiden.

17. Verfahren zur Zubereitung eines Nahrungsmittels oder Getränks, folgende Schritte umfassend:
- Bereitstellen einer Packung (1) nach einem der Ansprüche 1 bis 10 und Anordnen der Packung mit dem Einlass und dem Auslass nach unten weisend,
- Einspritzen von Wasser in die Packung zum Vermischen mit dem Nahrungsmittel- oder Getränkeinhaltsstoff,
- Zulassen, dass das zubereitete Getränk durch den Auslass in einen Behälter austritt.

18. Verfahren nach Anspruch 17, wobei die Packung (2) während der Getränkezubereitung nicht druckbeaufschlagt ist.

## Revendications

1. Conditionnement (1) avec un volume interne (2) dans lequel un ingrédient de produit alimentaire ou de boisson (7) est stocké et dans lequel une boisson est produite lorsque de l'eau est introduite à l'intérieur,
ledit volume interne (2) étant défini par des feuilles de matériau (10) jointes l'une à l'autre au niveau de leurs bords et ledit volume interne (2) présentant une forme généralement plane définissant un plan (P) orienté verticalement pendant la production de boisson,
ledit conditionnement comprenant au moins une entrée (3) pour introduire de l'eau dans le volume interne et au moins une sortie (4) pour distribuer la boisson depuis ledit volume interne, ladite entrée d'eau et ladite sortie de boisson étant positionnées en bas du conditionnement et étant au moins partiellement positionnées entre deux bords joints des feuilles de matériau (10), et
l'extrémité externe (3a) de l'entrée d'eau (3) étant orientée de façon essentiellement perpendiculaire au plan (P) défini par le volume interne (2), et
la sortie de boisson (4) étant un tube s'étendant essentiellement verticalement à partir du volume interne (2), et
dans lequel la sortie de boisson comprend une partie évidée (500) où est monté un adaptateur de forme (61, 62, 63) pour devenir le conduit interne de la sortie de boisson, configurant la forme interne de la sortie de boisson pour permettre la préparation de différentes boissons, différant par leurs textures.

2. Conditionnement selon la revendication 1, où le conditionnement comprend un insert unique comprenant l'entrée d'eau et la sortie de boisson, ledit insert unique étant positionné en bas du conditionnement et étant partiellement positionné entre deux bords joints des feuilles de matériau.

3. Conditionnement selon l'une quelconque des revendications précédentes, dans lequel la forme interne de la sortie de boisson est configurée pour limiter la présence de bulles dans la boisson.

4. Conditionnement selon la revendication précédente, dans lequel le conduit interne de la sortie de boisson comprend au moins une plaque transversale avec au moins deux trous, lesdits trous ayant une forme configurée pour briser les bulles lorsque la boisson s'écoule à travers eux.

5. Conditionnement selon la revendication précédente, dans lequel les trous dans la plaque transversale présentent une forme telle qu'au moins une partie du contour de chaque trou est rectiligne.

6. Conditionnement selon l'une quelconque des revendications 1 ou 2, dans lequel la forme interne de la sortie de boisson est configurée pour régler la taille des bulles dans la boisson.

7. Conditionnement selon la revendication précédente, dans lequel la forme interne de la sortie de boisson peut être configurée pour diviser l'écoulement de boisson entrant dans le conduit interne en plusieurs sous-écoulements séparés de boisson à l'extrémité du conduit interne de la sortie de boisson.

8. Conditionnement selon l'une quelconque des revendications 1 ou 2, dans lequel la forme interne de la sortie de boisson est configurée pour améliorer le mélange de l'ingrédient de boisson et de l'eau avant la distribution.

9. Conditionnement selon la revendication précédente, dans lequel la sortie de boisson comprend un mélangeur statique afin d'augmenter la turbulence d'écoulement à l'intérieur du conduit interne de la sortie de boisson et/ou d'augmenter le trajet de l'écoulement de boisson dans le conduit interne de la sortie de boisson.

10. Conditionnement selon l'une quelconque des revendications précédentes, où ledit conditionnement comprend au moins deux sorties de boisson (4), lesdites sorties différant par leur forme interne.

11. Système de production d'une gamme d'inserts uniques comprenant au moins une entrée d'eau (3) et au moins une sortie de boisson (4) pour un conditionnement selon l'une quelconque des revendications précédentes, ledit système comprenant :
- un corps d'insert unique (50) comprenant ladite au moins une entrée d'eau (3) et au moins une partie évidée (500) pour recevoir un adaptateur de forme définissant la forme interne de la sortie de boisson,
et
- au moins deux adaptateurs de forme différents (61, 62, 63) définissant différentes formes internes de la sortie de boisson et s'adaptant à la partie évidée (500) du corps d'insert unique.

12. Système selon la revendication précédente, dans lequel, dans le corps d'insert unique (), l'extrémité de la partie évidée (500) est fermée par un bouchon, ledit bouchon comprenant une liaison fixée au corps d'insert unique.

13. Système selon la revendication 11 ou 12, dans lequel des adaptateurs de forme sont des tubes présentant des formes internes différentes.

14. Système selon la revendication 11 ou 12, dans lequel des adaptateurs de forme sont des pales de mélange.

15. Système selon l'une quelconque des revendications 11 à 14, pour produire un conditionnement selon la revendication 10, dans lequel le corps d'insert unique (50) comprend deux parties évidées (500), chacune étant configurée pour recevoir et monter un adaptateur de forme (61, 62, 63) définissant la forme interne de la sortie de boisson.

16. Gamme de conditionnements (1a, 1b) selon l'une quelconque des revendications 1 à 10, dans laquelle les conditionnements diffèrent par la forme interne d'au moins une sortie de boisson (4).

17. Procédé de préparation d'un produit alimentaire ou d'une boisson comprenant les étapes consistant à :
- fournir un conditionnement (1) selon l'une quelconque des revendications 1 à 10 et positionner ledit conditionnement avec l'entrée et la sortie positionnées vers le bas,
- injecter de l'eau dans le conditionnement pour la mélanger avec l'ingrédient de produit alimentaire ou de boisson,
- laisser la boisson préparée s'échapper à travers la sortie dans un réceptacle

18. Procédé selon la revendication 17, dans lequel le conditionnement (2) n'est pas mis sous pression pendant la préparation de boisson
